# EUROPEAN PATENT APPLICATION

(11) **EP 1 914 653 A1**
(43) Date of publication of application: **23.04.2008**
(21) Application number: 07020545.5
(22) Date of filing: 19.10.2007
(51) Int. Cl.: G06F 21/00

(54) **Boot process**

(30) Priority: 20.10.2006 GB 0620926
(71) Applicant: Vodafone Group PLC, Newbury Berkshire RG14 2FN (GB)
(72) Inventor: Bone, Nicholas, Thatcham Berkshire RG19 4RS (GB); Belrose, Caroline Jessica, Marlborough Wiltshire SN8 4AG (GB); Wright, Timothy, Reading Berkshire RG30 2PE (GB)
(74) Representative: Keston, David Arthur

(57) **Abstract**

When a secure boot operation fails, the operation of a mobile telecommunications terminal can be severely impacted. In order to lower the impact on the user, the invention describes a method for automatically implementing a "safe boot" mode, whereby code can be accessed solely for the purpose of handling failed operations and if necessary providing limited services from the failing terminal.

## Description

The present invention relates to a process for ensuring the integrity of terminal boot operations.

In order to protect the integrity of core software on a mobile telecommunications terminal (e.g. the Operating System, OS), a secure boot process can be implemented in which the integrity of certain core code is verified before the code is loaded in the boot process. If it is likely that this core code may change over its lifetime (e.g. may require updates), then a flexible secure boot process can be implemented where core code, along with the measurements to which it is compared at boot time, may be updated by authorised parties.

However it is possible that the secure boot process may fail due to core code corruption, failure of code updates, etc. In this case, it is not clear what action the terminal should take, but in most cases we assume that the terminal will shut down since it may not be adequately trusted to do anything else.

This makes it impossible to recover from secure boot failures over the air, and does not provide for a good user experience since the user would have to take their terminal to a local operator's shop for recovery.

It is therefore an object of the invention to obviate or at least mitigate the aforementioned problems.

In accordance with one aspect of the present invention, there is provided a method for booting a mobile device having safe boot code and normal boot code, the method including:
checking the value of a safe boot flag,
where the value of the flag indicates that safe boot is required, performing a safe boot operation;
where the value of the flag indicates that no safe boot is required, attempting a normal boot operation; and
where the normal boot operation fails, setting the safe boot flag to indicate the need for a safe boot operation, thereby causing the next boot to be a safe boot.

The normal boot may be a secure boot: the safe boot too may be a secure boot. Furthermore, the secure boot may use a secure boot mechanism that includes RIMS.

In one variant, the safe boot may use a protected subset of the code used for normal boot.

In accordance with a further aspect of the invention, there is provided a mobile device having a safe boot functionality, the device including: a flag memory means for storing the value of a safe boot flag, where the value of the flag indicates that safe boot is required; a normal boot memory means for storing normal boot code; a safe boot memory means for storing safe boot code; and a processor for checking the value of the flag and for performing a safe boot operation; wherein, in operation, the processor executes a normal boot operation where the value of the flag indicates that no safe boot is required, and sets the safe boot flag to indicate the need for a safe boot operation where the normal boot operation fails, thereby causing the next boot to be a safe boot.

In another variant, the safe boot code may be stored in memory separate from the memory used to store the normal boot code. In particular, the separate memory may be provided on a removable memory card. Alternatively, the separate memory may be provided on a SIM card.

Safe boot processes are known in the field of computer hardware. Conventionally, however, the decision to enter safe boot is externally triggered. This is particularly inappropriate in the case of mobile terminals since the expectation of the user is that they should have continuity of service.

In the invention, entry to a safe boot is predicated on a device flag set during an earlier secure boot operation that failed (i.e. no external triggering).

For a better understanding of the present invention, reference will now be made, by way of example only, to a specific embodiment of the invention.

In one embodiment, a mobile telecommunications terminal (i.e. a mobile phone) is provisioned with a secure boot process. In a variation of this embodiment the secure boot process is flexible. If the secure boot process fails at some point (i.e. some piece of code fails verification), then the boot process terminates, diagnostic information is written to a secure boot diagnostic file, and a secure boot flag is set to indicate that the secure boot process failed.

When the terminal reboots, it checks the secure boot success flag (to see whether it indicates that the previous secure boot failed). If no such flag is found, then the terminal boots as normal. Otherwise the terminal initiates a "safe" debug boot process which boots into a "safe" debug mode that offers limited functionality to enable the terminal to be recovered and from which diagnostic information may be retrievable. The safe debug mode, in one variant of the embodiment, is the implementation of a subset of the normal boot code and, in another variant, the implementation of a completely different debug boot code.

In order to safeguard this safe debug boot code, the invention ensures that the safe debug boot code is only used during the safe debug boot process.

Furthermore, in the variant of the embodiment using completely different debug boot code, the debug boot code is stored separately from the normal boot code (for instance, in a separate part of the terminal's flash memory or on a memory card or SIM card inserted in the mobile terminal). Where a subset of the normal boot code is used, this too is stored separately from the rest of normal boot code (for instance, in a separate part of the terminal's flash memory or on a memory card or SIM card inserted in the mobile terminal).

In a further variant of the embodiment, the Trusted Computing Group (TCG) secure boot mechanism (or an equivalent secure boot mechanism) is deployed, and the debug boot code will be integrity protected using a separate set of Reference Integrity Metrics (RIM) certificates, which are not used except for debug boots.

A safe debug boot allows the terminal to enter a trusted state after the failure of a normal secure boot process, from which it would be possible to perform over the air (OTA) diagnostic and recovery operations. Alternatively, or additionally, the boot process responds to integrity failures during run-time by setting the safe boot flag before the terminal is next booted, so that the next boot will be an instance of a safe debug boot. This would be done where it is anticipated that a normal boot would fail, thereby avoiding the need for the terminal to experience a failed normal boot and a subsequent reboot.

Depending on the severity of the failures, the user may even be provided with limited functionality after the safe debug boot. This would greatly improve the user experience since it avoids the user having to take the terminal into a store. It would also make recovery procedures more efficient since they may be done over the air.

## Claims

1. A method for booting a mobile device having safe boot code and normal boot code, the method including:
checking the value of a safe boot flag,
where the value of the flag indicates that safe boot is required, performing a safe boot operation;
where the value of the flag indicates that no safe boot is required, attempting a normal boot operation; and
where the normal boot operation fails, setting the safe boot flag to indicate the need for a safe boot operation, thereby causing the next boot to be a safe boot.

2. A method as claimed in claim 1, wherein the normal boot operation is a secure boot operation.

3. A method as claimed in claim 1 or claim 2, wherein the safe boot operation is a secure boot operation.

4. A method as claimed in claim 2 or claim 3, wherein the secure boot operation uses a secure boot mechanism that includes RIMs.

5. A method as claimed in any one of claims 1 to 4, wherein the safe boot operation uses a protected subset of the code used for normal boot operation.

6. A method as claimed in any one of claims 1 to 5, wherein the safe boot flag is set after a run-time failure, thereby causing the next boot to be a safe boot.

7. A mobile device having a safe boot functionality, the device including:
a flag memory means for storing the value of a safe boot flag, where the value of the flag indicates that safe boot is required;
a normal boot memory means for storing normal boot code;
a safe boot memory means for storing safe boot code; and
a processor for checking the value of the flag and for performing a safe boot operation;
wherein, in operation, the processor executes a normal boot operation where the value of the flag indicates that no safe boot is required, and sets the safe boot flag to indicate the need for a safe boot operation where the normal boot operation fails, thereby causing the next boot to be a safe boot.

8. A device as claimed in claim 7, wherein the normal boot memory means and safe boot memory means are provided in a common memory means.

9. A device as claimed in claim 7, wherein the normal boot memory means is physically separate from the safe boot memory means.

10. A device as claimed in claim 9, wherein the safe boot memory means is provided on a removable memory card.

11. A device as claimed in claim 10, wherein the safe boot memory means is provided on a smartcard.
